# EUROPEAN PATENT APPLICATION

(11) **EP 3 499 493 A1**
(43) Date of publication of application: **19.06.2019**
(21) Application number: 17207741.4
(22) Date of filing: 15.12.2017
(51) Int. Cl.: G09G 3/34, G06F 21/84, G06T 1/00, G06K 19/06, H04B 10/116, H04N 7/035, H04N 21/41, H04N 21/431, H04N 21/47, H04N 21/8358

(54) **DISPLAY DEVICE AND METHOD OF DISPLAYING IMAGES**

(71) Applicant: Vestel Elektronik Sanayi ve Ticaret A.S., 45030 Manisa (TR)
(72) Inventor: PARLAKER, Mehmet Emre, 45030 Manisa (TR); ÖZAYDIN, Mustafa Çaglar, 45030 Manisa (TR)
(74) Representative: Flint, Adam

(57) **Abstract**

A display device has a plurality of visible light sources (23) for outputting visible light and a plurality of invisible light sources (26) for outputting invisible light. The visible light sources (23) and the invisible light sources (26) are capable of outputting light simultaneously. The invisible light sources (26) are arranged selectively to output invisible light only at one or more edges of the display area (25) of the display device and not to output invisible light at the central portion (24) of the display area of the display device. Accordingly, visible content can be displayed at a central portion (24) of the display area and invisible content can be simultaneously displayed at one or more edges (25) of the display area.

## Description

### Technical Field

The present disclosure relates to a display device and method for displaying images at a display area of the display device.

### Background

Various proposals have been made for displaying information or other content on a display screen among other content being displayed on the display screen.

To elaborate slightly, and without restricting the scope of the present disclosure, a display screen may be being used to display content to be seen by all viewers, in which that content may be for example a television programme or a film/movie, or information relating to flight times at an airport, train times at a railway station, etc. Other information or content is also displayed on the display screen at the same time. This other information or content may be intended to be viewed only by selected viewers or only using specific viewing devices.

A number of the known proposals use various techniques to attempt to "hide" this other information or content from ordinary viewers. Many such techniques are computationally complex, as they involve processing of the image to make small changes in luminance and/or hue at the pixels where the other information or content is being displayed in order to present that information or content in a form that can be captured by for example a camera but yet cannot normally be seen by ordinary (human) viewers viewing the screen directly. Even then, the added other information or content can still interfere with viewing of the underlying content, and can, for example, obstruct elements of the underlying image or video stream, thereby disrupting the viewing experience of the user. The added other information can lead to luminance and chromatic deviations, thereby leaving visibly blemished areas on the images and video streams.

### Summary

According to a first aspect disclosed herein, there is provided a method of displaying images at a display area of a display device, the method comprising:
displaying visible content at a central portion of the display area; and
simultaneously displaying invisible content only at one or more edges of the display area.

The edges of the display area, where invisible light may be selectively output so as to display invisible content, may correspond to the horizontal and vertical black bars that are often displayed on a display screen when the aspect ratio of the visible content is different from the aspect ratio of the display area.

In an example, the display device comprises a plurality of visible light sources for outputting visible light and a plurality of invisible light sources for outputting invisible light, the invisible light sources being arranged selectively to output invisible light only at one or more edges of the display area of the display device and not to output invisible light at the central portion of the display area of the display device, the visible light sources being arranged selectively to output visible light across the whole of the display area of the display device, and wherein:
when the invisible content is displayed at one or more edges of the display area, the visible light sources are controlled not to output visible light at said one or more edges of the display area.

In an example, at least some of the invisible light sources comprise a quantum dot that is arranged to output invisible light.

In an example, at least some of the visible light sources comprise a quantum dot that is arranged to output visible light.

In an example, the method comprises:
the display device receiving visible content to be displayed;
the display device determining that the visible content to be displayed is not to be displayed at one or more edges of the display area;
the display device receiving invisible content to be displayed; and
the display device displaying the invisible content at one or more edges of the display area that have been determined as not displaying visible content.

In such a case, in an example, the visible content may be provided by some content provider (such as a television broadcaster) or some other source, such as a DVD or Blu Ray player or other local storage or on-demand from some remote storage. On the other hand, the invisible content may be provided from some other source, which may be for example a user who wishes the invisible content to be presented on the display device.

In an example, the determining that the visible content to be displayed is not to be displayed at one or more edges of the display area comprises comparing an aspect ratio of the visible content with an aspect ratio of the display area to identify one or more edges of the display area where visible content is not to be displayed.

In an example, the method comprises:
the display device receiving content to be displayed, the content to be displayed including visible content and invisible content;
the display device receiving display control commands with the content to control the display of the content, the display control commands instructing the display device to display the invisible content at one or more edges of the display area and the display control commands instructing the display device to display the visible content at a central portion of the display area.

According to a second aspect disclosed herein, there is provided a display device for displaying images at a display area of the display device, the display device comprising:
a plurality of visible light sources for outputting visible light;
a plurality of invisible light sources for outputting invisible light;
the visible light sources and the invisible light sources being capable of outputting light simultaneously;
the invisible light sources being arranged selectively to output invisible light only at one or more edges of the display area of the display device and not to output invisible light at the central portion of the display area of the display device;
whereby visible content can be displayed at a central portion of the display area and invisible content can be simultaneously displayed at one or more edges of the display area.

In an example, the visible light sources are arranged selectively to output visible light across the whole of the display area of the display device.

In such a case, visible content can be displayed across the whole of the display area. This may occur when for example the aspect ratio of the visible content is the same as the aspect ratio of the display area. In such a case, when the aspect ratio of the visible content is the same as the aspect ratio of the display area, there may be no display of invisible content, though this may nevertheless be possible in some cases.

In an example, the plurality of light sources form a backlight for illuminating a display screen of the display device.

In an example, the plurality of light sources comprise light-emitting diodes (LEDs).

In an example, at least some of the invisible light sources comprise a quantum dot that is arranged to output invisible light.

In an example, at least some of the visible light sources comprise a quantum dot that is arranged to output visible light.

### Brief Description of the Drawings

To assist understanding of the present disclosure and to show how embodiments may be put into effect, reference is made by way of example to the accompanying drawings in which:
Figure 1 shows schematically a display screen of a first aspect ratio displaying an image having a first different aspect ratio;
Figure 2 shows schematically a display screen of a first aspect ratio displaying an image having a second different aspect ratio;
Figure 3 shows schematically a side view of a direct backlit display device;
Figure 4 shows schematically an exploded view of an example of a display screen and a backlight of a display device according to an aspect described herein;
Figure 5 shows schematically a flow of a first example of a method according to an aspect described herein; and
Figure 6 shows schematically a flow of a second example of a method according to an aspect described herein.

### Detailed Description

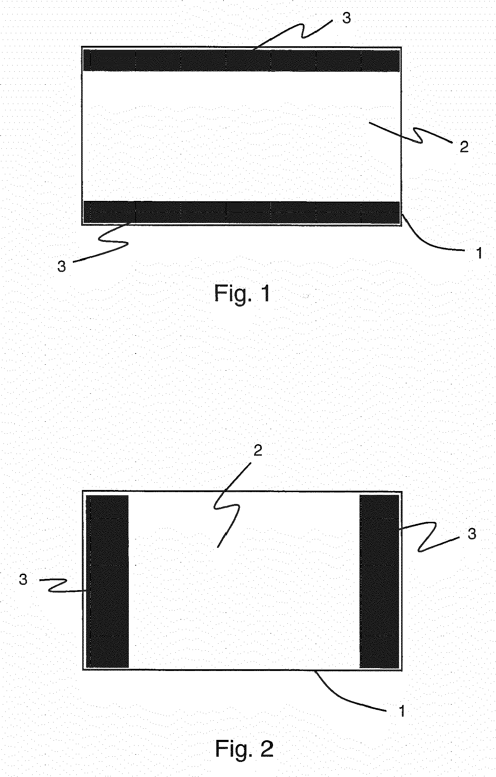

Referring first to Figure 1, this shows schematically a display screen 1 that has a first aspect ratio. By way of example only, the aspect ratio may be 16:9, which is commonly used currently in many display devices. The display screen 1 is displaying an image 2 (which may be a still image or one of a plurality of images in a video stream) that has a different aspect ratio. By way of example, the image 2 has an aspect ratio of 21:9, which is commonly referred to as a "letterbox" format and often used for films/movies and the like. This results in the display screen 1 having portions or bars 3 where no content is being displayed. These bars 3 are often therefore black (though some display devices enable the user to modify the background colour of these bars 3). In this example, given the different aspect ratios of the display screen 1 and the image 2, the bars 3 are horizontal and are at the top and bottom edges of the display screen 1 in this example.

Figure 2 shows schematically the display screen 1, having in this example the same 16:9 aspect ratio, displaying an image 2 which again has a different aspect ratio from the display screen 1. In this example, the image 2 has an aspect ratio of 4:3, resulting in portions or vertical bars 3 at the left and right edges of the display screen 1 in this example where no content is being displayed.

In broad terms, aspects described herein make use of one or more portions at the edge(s) of the display area where no content is being displayed as regions where (further) information or content can be displayed. The portions may be for example bars that arise because of a difference in aspect ratio between the (underlying) content that is being displayed and the aspect ratio of the display screen, as discussed by way of example above. Moreover, aspects described herein use invisible light (i.e. light that cannot be seen by the naked eye) to display the (further) information or content in these otherwise unused portions, or bars at the edge(s), of the display area. The remaining portion of the display area may still be used to display the "ordinary", underlying content, using visible light, so that the underlying content can still be seen by viewers. For completeness it is noted that, from the above discussion, it will be clear that the remaining portion where the underlying content is displayed using visible light may extend to both left and right sides of the display area in some cases as in Figure 1 and may extend to both the top and bottom of the display area in some cases as in Figure 2.

"Visible" light as used herein is light that is ordinarily visible to the naked (human) eye. Visible light is typically regarded as light with a wavelength in the range of about 390 or 400 nm to 700 nm. A visible light source is a light source that generates visible light (whether directly or as a combination of a source of power that causes another element to emit visible light). In contrast, "invisible" light is light that is not ordinarily visible to the naked (human) eye (though it can be detected and viewed using various different types of camera and other technology of course). Invisible light is therefore typically regarded as light with a wavelength less than about 390 or 400 nm or greater than about 700 nm. As specific examples, infrared is typically defined as light with a wavelength in the range of around 700 nm to 1 mm and ultra violet is typically defined as light with a wavelength in the range of about 10 nm to 400 nm. Examples of visible and invisible light sources will be discussed further below.

Display devices are used in many different types of apparatus, including for example television screens or monitors, computer displays or monitors, and displays for other computing devices, including smartphones, tablet computers, laptop computers, etc. Display devices are also used in many public environments in so-called "signage", for example, for displaying advertisements or for information or entertainment that is of interest to a larger audience.

Conventionally, display devices employ a number of light sources for providing light to generate an image. The light sources may be for example light sources that are used in a backlit display device. In a backlit display device, the backlight has plural light sources for emitting light. The light sources may be for example LEDs (light emitting diodes). In a "direct-lit" backlight, the light sources are arranged typically in a regular array on a reflector panel. The light sources emit light which is directed through a diffuser to a display panel. The diffuser helps to reduce glare that can otherwise occur. The display panel is formed of or includes a number of display cells or elements (which are also often referred to as "pixels" as they typically correspond to pixels in the image that is displayed). The display cells or elements are controllable so as to selectively transmit or prevent light from the light sources passing through the display panel. The display elements may be for example LCDs (liquid crystal display devices). In a display device having a direct-lit backlight, generally there is a light source for each display cell or element. Moreover, the display cell or element may be illuminated with white light and so is formed of three sub-cells or "subpixels", which selectively transmit red, green or blue light respectively and thus act as colour filters. The individual sub-cells are controlled according to the colour of the corresponding pixel of the image that is to be displayed.

In another example, the light sources may be for example light sources that are used in an edge-lit backlight. That is, there is at least one light source which is arranged at or towards an edge of the display device. Commonly, there are light sources arranged around each of the four edges of a display device that has an edge-lit backlight. The light sources are typically elongate and may be for example cold-cathode fluorescent lamps. In other examples, the light sources located at the edges are plural LEDs or other individual light sources arranged along the edges of the display device. The light sources may emit light into a light guide which is mounted in front of a reflector. The light guide directs the light through a diffuser into a display panel. Similarly to the direct-lit backlight example described above, the display panel may have plural individually controllable display cells or elements. The display cells or elements may be for example LCDs. Again, the display cell or element may be illuminated with white light and so is formed of three sub-cells or subpixels, which selectively transmit red, green or blue light respectively and thus act as colour filters. The individual sub-cells are controlled according to the colour of the corresponding pixel of the image that is to be displayed.

In other examples, the light sources may effectively generate the pixels directly, i.e. the light from the light source corresponds to the light required for that pixel and no backlight is required. The light sources may for example generate coloured light or may generate white light which is then passed through controllable coloured filters so as to achieve different colours in the image. Display devices that generate the pixels directly include for example display devices that use OLEDs (organic light emitting diodes), (inorganic) LEDs, including for example an LED display or "wall" or a micro LED display, and plasma technology.

In another example, so-called "quantum dots" may be used. A quantum dot is a small semiconductor particle, typically of only a few nanometres in size. Many types of quantum dot emit light of a specific frequency if electricity or light is applied to them, and these frequencies can be precisely tuned by selecting the dot's size, shape and/or material. A quantum dot display is a display device that uses quantum dots, typically to produce pure monochromatic red, green, and blue light. Currently available quantum dot displays tend to use edge-lit backlights to provide light that is used to cause the quantum dots to emit light ("photoluminescence"), though there are proposals to use direct-lit backlights to illuminate the quantum dots. In a common application, light from a blue LED backlight is converted as needed by quantum dots to relatively pure red and green, so that this combination of blue, green and red light incurs less blue-green crosstalk and light absorption in the colour filters after the LCD or other display element screen, thereby increasing useful light throughput and providing a better colour gamut. In another alternative, the backlight may produce light other than blue, and may for example produce white or ultra violet light, which is passed through red, green and blue quantum dots to generate red, green and blue light as needed.

As an alternative to photoluminescence to drive the quantum dots as just described, electroluminescence may be used, in which electrical power is provided to the quantum dots to drive the production of light by the quantum dots.

The use of quantum dots in examples described herein has particular advantages, as will be discussed further below.

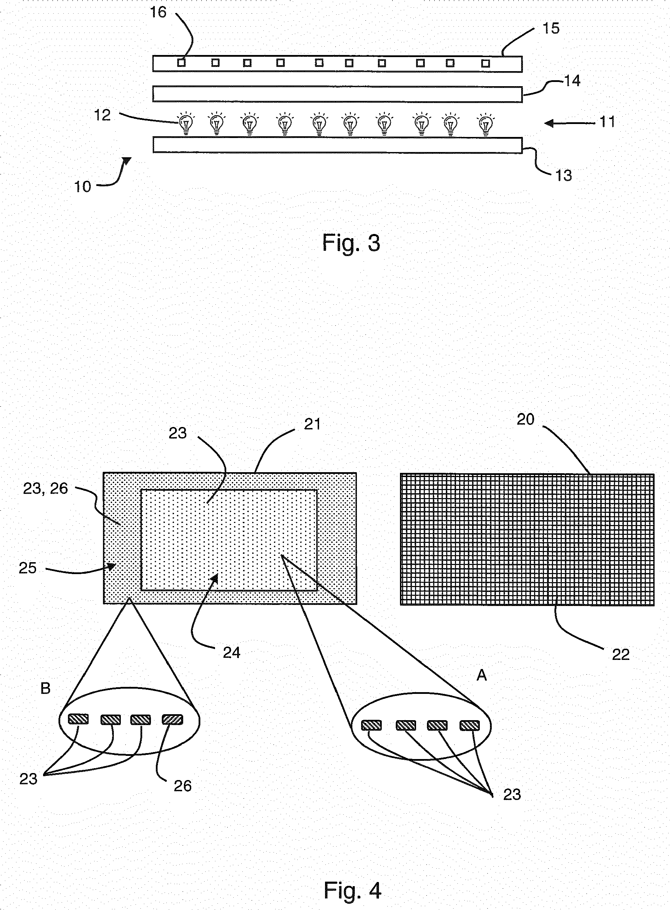

To illustrate this further, Figure 3 shows schematically a side view of a display device 10 having a direct-lit backlight 11. As is known, the direct-lit backlight 11 has plural light sources 12 for emitting light. The light sources 12 may be for example LEDs (light emitting diodes). The light sources 12 are arranged typically in a regular array on a reflector panel 13. The light sources 12 emit light which is directed through a diffuser 14 to a display panel 15. The diffuser 14 helps to reduce glare that can otherwise occur. The display panel 15 is formed of or includes a number of display elements 16 (which are also often referred to as "pixels" as they typically correspond to pixels in the image that is displayed). The display elements 16 are controllable so as to selectively transmit or prevent light from the light sources 12 passing through the display panel 15. The display elements 16 may be for example LCDs. In a display device 10 having a direct-lit backlight 11, generally there is a light source 12 for each display element 16. Moreover, the light sources 12 may emit white light (which may for example be produced by a blue LED emitting blue light which also passes through a phosphor or other material which then typically outputs green and red light (i.e. yellow light). In such a case, the display elements 16 may be formed of three sub-cells or subpixels, which selectively transmit red, green or blue light respectively and thus act as colour filters. The individual sub-cells are controlled according to the colour of the corresponding pixel of the image that is to be displayed. As an alternative, the light sources 12 may emit light that is passed to quantum dots, which in turn generate light of a specified and desired wavelength, which then passes to the display elements 16 to be passed or blocked as required to display the image.

Regardless of the specific technology used in the display device to generate the light that forms the pixels of the image, in aspects described herein some of the light sources generate visible light and some of the light sources generate invisible light. The invisible light sources are used to display invisible content only at one or more edges of the display area. The visible light sources may be used to display visible content over the entirety of the display area, though the visible light sources will only display visible content at a central portion of the display area when the invisible light sources are used to display invisible content at one or more edges of the display area. The invisible content cannot be seen with the naked eye, but can be detected using for example an appropriate camera or other imaging technology. The visible content may be some underlying content that is intended to be seen freely by viewers (and may be for example images relating to a television programme, a film or movie, advertising, public information concerning flight or train times, etc., etc.). The invisible content may be additional content, which is intended to be viewed only using an appropriate viewing device, such as special glasses or goggles, etc., or some imaging device. The invisible content may be a messages or commands, etc., which may be human-readable (e.g. straightforward text) or machine-readable (e.g. in the form of data tags or barcodes such as bokodes and "QR" or matrix barcodes). The invisible content may be encrypted.

An example of an arrangement that may be used in aspects described herein is shown schematically in the exploded view of Figure 4, which shows a display screen 20 and a backlight unit 21. The display screen may be a screen of for example a display device as used in many different types of apparatus, including for example television screens or monitors, computer displays or monitors, and displays for other computing devices, including smartphones, tablet computers, laptop computers, so-called "signage", etc.

The display screen 20 of this example has display elements 22 which are controllable so as to selectively transmit or prevent light from the backlight unit 21 passing. The display elements 22 may be for example LCDs.

The backlight unit 21 of this example has light sources which are arranged as two different groups. The light sources in a central portion 24 of the backlight unit 21 are all visible light sources 23, which generate visible light. This is indicated in the inset view A in Figure 4. In contrast, the light sources at each edge 25 are a mixture of visible light sources 23, which generate visible light, and invisible light sources 26, which generate invisible light. This is indicated in the inset view B in Figure 4, in which every fourth (in this example) light source is an invisible light source 26.

The central portion 24 may be defined or delimited by the region that is not used at any point to display black portions or bars owing to a difference in aspect ratios of the underlying content that is being displayed and the display screen 20 itself. This is in contrast to the edges 25 which sometimes may be displaying black owing to a difference in contrast ratio of the underlying content that is being displayed and the display screen 20 itself.

In use, and simply put, when the display screen 20 is displaying (using visible light) content that does not extend across the whole of the display screen, for example when the aspect ratio of the content is different from the aspect ratio of the display screen 20, then the unused parts of the display screen 20 are used to display content using invisible light. This may be achieved by only activating invisible light sources 26 located at one or more of the edges 25 of the display screen 20 to display the additional content, and dimming or switching off all of the visible light sources 23 corresponding to the part of the display screen 20 that is displaying the invisible content. If the display screen 20 is displaying (using visible light) content that does extend across the whole of the display screen 20, then all of the visible light sources 23 across the whole of the display screen 20 may be used (as conventional) and the invisible light sources 26 may be dimmed or switched off.

A number of options for providing the additional content to be displayed with invisible light are possible.

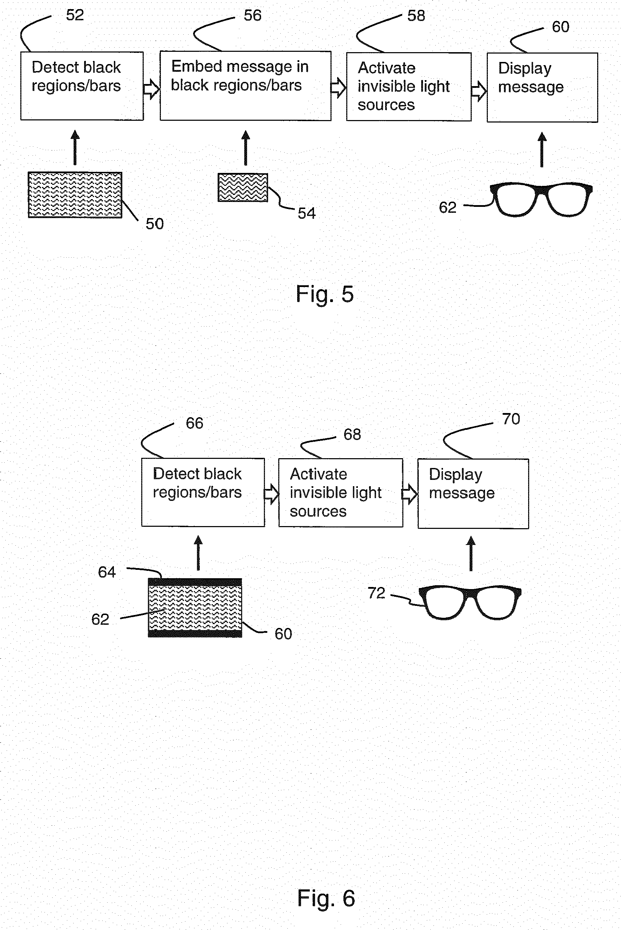

For example, referring to Figure 5, in one example, the underlying content is first received at the display device and the additional content is subsequently added for display. In particular, first, the underlying content 50 is received at the display device. The underlying content may be received from for example some content provider (such as a television broadcaster) via satellite, cable, terrestrial transmission, etc., or some other source, such as a DVD or Blu Ray player or other local storage or on-demand from some remote storage. The display device detects 52 black regions or bars, which are candidates for displaying additional content using invisible light. The detection of the black regions or bars may be carried out by the display device comparing the aspect ratio of the received underlying content 50 with the aspect ratio of the display screen.

Then, the additional content 54 to be displayed using invisible light is received by the display device. The additional content 54 may be added manually by a user, for example by typing into a keyboard associated with the display device, and/or by some automated process. The additional content 54 is then processed by the display device so that the additional content 54 is effectively embedded 56 into one or more of the black regions or bars. The corresponding invisible light sources 26 are activated 58. This results in display 60 of the additional content 54 using invisible light in the one or more black regions or bars. The underlying content 50 may be displayed in the remaining portion(s) of the display screen, by operating the corresponding visible light sources 23 as conventional.

When the additional content 54 is processed by the display device, in this example this may be carried out by a video processor of the display device which normally processes video for display or by some other processor, which may be specifically provided for this purpose.

The additional content 54 displayed in the one or more black regions or bars can be viewed by a user using appropriate glasses or goggles 62 or the like, which convert the received invisible light to a form that is visible to a user. For example, in the case that the invisible light is infrared, the glasses 62 may be "night vision" glasses or the like, which convert received infrared to visible light. Alternatively or additionally, the additional content 54 may be viewed using some camera or other imaging device. In this regard, it is noted that the sensors of digital cameras, whether a stand-alone digital camera or a digital camera incorporated into some other device such as a smartphone, tablet computer, etc., typically are already capable of receiving infrared light. Such a device may be arranged to carry out commands or issue commands to other devices based on the additional content that is viewed by the device.

As another example, referring to Figure 6, the content 60 that is received at the display device has the underlying content 62 to be displayed using visible light and the additional content 64 that is to be displayed using invisible light. The content 60 may be be received from for example some content provider (such as a television broadcaster) via satellite, cable, terrestrial transmission, etc., or some other source, such as a DVD or Blu Ray player or other local storage or on-demand from some remote storage.

The received aggregate content 60 will normally specify the regions of the display screen where the visible content 62 and the invisible content 64 are to be respectively displayed. As such, the display device can detect 66 the one or more black regions or bars, which are where the additional content will be displayed using invisible light. The corresponding invisible light sources 26 are activated 68. This results in display 70 of the additional content 64 using invisible light in the one or more black regions or bars. The additional content 64 displayed in the one or more black regions or bars can again be viewed by a user using appropriate glasses or goggles 72 or the like or some camera or other imaging device. The underlying content 62 may be displayed in the remaining portion(s) of the display screen, by operating the corresponding visible light sources 23 as conventional.

As the content 60 that is received in this example already includes the underlying content 62 to be displayed using visible light and the additional content 64 that is to be displayed using invisible light, no modification of the video processor or the like of the display device is required as this can simply process the incoming content as conventional.

It may be noted that in either case, even if the underlying content 50, 62 has the same aspect ratio as the display screen 20, the size and/or aspect ratio of the underlying content 50, 62 may be deliberately adjusted, either at the source of the content or locally at the display device, so that not all of the display screen is used to display the underlying content 50, 62 using visible light. This therefore leaves unused portions which can be used to display additional content using invisible light.

As discussed above, the principles described herein may be employed in display devices of different types which use a number of different display technologies, including for example display devices that use backlights and display devices in which the light sources generate the pixels directly.

A particularly suitable light source arrangement for examples described herein is one that uses quantum dots, at least for some or all of the invisible light sources 26 and optionally also for some or all of the visible light source 23. Quantum dots emit, or can be formed to emit, light that is in essence monochromatic (i.e. a single wavelength). In contrast, many other light sources, including incandescent light sources, cold-cathode fluorescent lamps, etc., emit light over a broad range of wavelengths. Even LEDs, which may be called "red" or "blue" or "green", emit light across a range of wavelengths. Likewise, if the light is produced by passing a white light through a coloured filter, the output coloured light is still formed of a range of wavelengths. The use of quantum dots means that when the invisible light sources 26 are being used to produce invisible light, this can be of a very narrow range of wavelengths or even monochromatic. This helps prevent visible light being produced in the black bars or other regions when the intention is only to present additional content that is invisible to the naked eye.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of displaying images at a display area of a display device, the method comprising:
displaying visible content at a central portion of the display area; and
simultaneously displaying invisible content only at one or more edges of the display area.

2. A method according to claim 1, wherein the display device comprises a plurality of visible light sources for outputting visible light and a plurality of invisible light sources for outputting invisible light, the invisible light sources being arranged selectively to output invisible light only at one or more edges of the display area of the display device and not to output invisible light at the central portion of the display area of the display device, the visible light sources being arranged selectively to output visible light across the whole of the display area of the display device, and wherein:
when the invisible content is displayed at one or more edges of the display area, the visible light sources are controlled not to output visible light at said one or more edges of the display area.

3. A method according to claim 2, wherein at least some of the invisible light sources comprise a quantum dot that is arranged to output invisible light.

4. A method according to claim 2 or claim 3, wherein at least some of the visible light sources comprise a quantum dot that is arranged to output visible light.

5. A method according to any of claims 1 to 4, comprising:
the display device receiving visible content to be displayed;
the display device determining that the visible content to be displayed is not to be displayed at one or more edges of the display area;
the display device receiving invisible content to be displayed; and
the display device displaying the invisible content at one or more edges of the display area that have been determined as not displaying visible content.

6. A method according to claim 5, wherein the determining that the visible content to be displayed is not to be displayed at one or more edges of the display area comprises comparing an aspect ratio of the visible content with an aspect ratio of the display area to identify one or more edges of the display area where visible content is not to be displayed.

7. A method according to any of claims 1 to 6, comprising:
the display device receiving content to be displayed, the content to be displayed including visible content and invisible content;
the display device receiving display control commands with the content to control the display of the content, the display control commands instructing the display device to display the invisible content at one or more edges of the display area and the display control commands instructing the display device to display the visible content at a central portion of the display area.

8. A display device for displaying images at a display area of the display device, the display device comprising:
a plurality of visible light sources for outputting visible light;
a plurality of invisible light sources for outputting invisible light;
the visible light sources and the invisible light sources being capable of outputting light simultaneously;
the invisible light sources being arranged selectively to output invisible light only at one or more edges of the display area of the display device and not to output invisible light at the central portion of the display area of the display device;
whereby visible content can be displayed at a central portion of the display area and invisible content can be simultaneously displayed at one or more edges of the display area.

9. A display device according to claim 8, wherein the visible light sources are arranged selectively to output visible light across the whole of the display area of the display device.

10. A display device according to claim 8 or claim 9, wherein the plurality of light sources form a backlight for illuminating a display screen of the display device.

11. A display device according to claim 10, wherein the plurality of light sources comprise light-emitting diodes (LEDs).

12. A display device according to any of claims 8 to 11, wherein at least some of the invisible light sources comprise a quantum dot that is arranged to output invisible light.

13. A display device according to any of claims 8 to 12, wherein at least some of the visible light sources comprise a quantum dot that is arranged to output visible light.
